# EUROPEAN PATENT SPECIFICATION

(11) **EP 4 303 551 B1**
(45) Date of publication and mention of the grant of the patent: **26.08.2026**
(21) Application number: 22183416.1
(22) Date of filing: 06.07.2022
(51) Int. Cl.: G01L 1/12, G01L 5/101, G01L 5/164

(54) **A SENSOR ARRAY COMPRISING SOFT FORCE SENSORS**
SENSORANORDNUNG MIT WEICHKRAFTSENSOREN
RÉSEAU DE CAPTEURS COMPORTANT DES CAPTEURS DE FORCE SOUPLE

(43) Date of publication of application: 10.01.2024
(73) Proprietor: Melexis Technologies SA, 2022 Bevaix (CH)
(72) Inventor: MANSOUR, Syrine, 2022 Bevaix (CH); LE SIGNOR, Théo, 2022 Bevaix (CH); CLOSE, Gael, 2022 Bevaix (CH); LOMAKIN, Ievgen, 2022 Bevaix (CH)
(74) Representative: Bardehle Pagenberg Partnerschaft mbB Patentanwälte Rechtsanwälte

(56) References cited:
- WO-A1-2022/093771
- DE-U1- 202012 104 894
- JP-A- 2011 153 826
- US-A1- 2009 218 163
- US-A1- 2015 338 291
- US-A1- 2019 041 278
- US-B2- 9 857 245

## Description

### TECHNICAL FIELD

The invention of the current application relates to a sensor array comprising an arrangement of soft force sensors and a corresponding method for measuring a force or a position therewith.

### BACKGROUND

A force sensor returns an electronic signal proportional to the mechanical force applied to the sensor. It can also be said that a force sensor converts the magnitude of applied force into a related electronic signal. The forces measured can be mechanical quantities such as tension, pressure, weight, torque, strain, and interior stress. Force sensors have become indispensable core components of power equipment, engineering machinery, various working machines, and industrial automation systems.

Nowadays force sensors have a wide field of application from the automotive industry to the medical sector.

For example, using existing force sensors, the forces applied to workpieces during an automatized manufacturing process can be measured in real time to control the force exerted upon the workpiece. In this way, the force-load of the workpieces can be controlled, and potentially limited, during the manufacturing process. This is in particular important when the workpiece is sensible.

However, measuring a force can also be important when the stiffness of an object shall be determined, since stiffness is defined as the extent to which an object resists deformation in response to an applied force.

Often times, the force sensors are used together with multi-axis robotic devices to move, position, hold, or sense objects. A multi-axis robotic device may, for example, include a robotic finger or a gripper. A robotic finger is like a humanoid finger but can be moveable in more directions. At the tip of the finger a force sensor can be applied, which allows to sense an object. A gripper is a mechatronic device, which exerts a force and a corresponding counterforce onto an object. Thereby, the force and the counterforce press the object against respective parts of the gripper such that the object and the respective gripper parts come into contact.

However, the sensors used in the prior art suffer from the disadvantage that the force applied to the object is not measured with sufficient accuracy. This may cause a damage to the object, by either excising too much force or too less force. Both needs to be prevented, as such precise force measurements are necessary.

In all field of application, the workpieces, objects or tissue onto which a force is applied may be irregular in shape. Then the forces which may be exerted upon the object need to be adapted to the shape. As such, it is necessary to measure the force applied to an object over a larger surface area instead of just punctually. For some applications it may even be necessary that the used sensor can adapt to the irregular shape itself.

Examples of force sensor arrays comprising sensing elements cooperating with a flexible layer are described in US 2019/041278 A1, US 9 857 245 B2 and DE 20 2012 104894 U1.

### SUMMARY

For the remainder of the description, the terms "invention" and "embodiment" do not necessarily correspond to the invention as claimed unless expressly stated.

The abovementioned needs are addressed by a sensor array for measuring a force according to claim 1. The sensor array comprises one or more evaluation circuits and a plurality of soft sensor elements. A plurality as used throughout this disclosure includes any number of two or more elements.

A soft sensor element according to the invention comprises a sensor, wherein the sensor is a multipixel sensor having two or more sensitive elements, a deformable element, and a at least one element for reacting with the sensor for measuring the force by a deformation of the deformable element , wherein the deformable element extends at least partially between the sensor and the at least one element and wherein the one or more evaluation circuits are configured to determine a location of the force based on gradients or differences in data obtained from the two or more sensitive elements of the multipixel sensor. The sensor may be an integrated circuit, a semiconductor die, a bare die, an unpackaged chip, or unpackaged integrated circuit. The sensor may be enclosed by the deformable element that may thereby provide passivation and encapsulation of the sensor, which avoids a need for using any lead frame or overmolding of the sensor. This allows the sensor array to be flexible and to be formed in different shapes. The element for reacting with the sensor may consist of a single element or a plurality of elements. The plurality of elements may comprise similarly shaped and/or similarly sized elements or differently shaped and sized elements.

Thereby, the deformable element may also comprise pockets which form a kind of free space, into which no material of the deformable element extends. This free space may be filled with air, the surrounding media or an inert gas. The pockets still form part of the deformable element, such that the deformable element still extends between the element and the sensor, even if free space is between the element and the sensor. In such an arrangement, it can also be said that the element and/or the sensor may partially or fully extent into the free space of the deformable element. It can also be said that the element is partially embedded or attached to a wall of the formed pocket.

An element is deformable when it undergoes a change of shape and/or volume, when an external force acts onto the element. Preferably, deformable means that the deformable element undergoes an elastic deformation, i.e. it returns to its original shape and/or volume once the external force does no longer act upon the element. The deformable element may be an elastic element and may comprise an elastomer. In some cases, the elastomer may be a biocompatible elastomer, which allows the soft sensor array to be used in medical applications. In some cases, the deformable element may form pockets into which the deformable element may extend when it is deformed by the external force. For example, when an external force causes a substantial deformation of the deformable element, a portion of the deformable element may be displaced by the force and can extend into one of the pockets. Thereby, a pocket is a hollow space into which material of the deformable element can extend when being deformed. The formation of pockets has not only the advantage of allowing the deformable element to extend therein, but also can be used to give some stability to the deformable element.

Furthermore, the deformable element provides both the ability for the element to move to a certain extent and change its position when a force is applied, but also can encapsulate and possible electrically isolate the sensor, respectively the sensor chip, such that no packaging of the sensor chip is necessary, which makes it possible to have a very thin sensor array, which is also in itself flexible. A further advantage is that the sensor chips of the different soft sensor elements can be arranged closer to one other as there is no package around each chip, which inherently increases the spatial resolution of the sensor array.

During operation, an object exerts a force onto the soft sensor element. Technically, the case that the soft sensor element is pressed against an object such that the soft sensor element exerts a force on the object is also encompassed, but in this disclosure it will not be distinguished between both cases since in both cases the force is amount wise the same, but is only directed in two opposing directions. Thereby, either the element for reacting with the sensor or the deformable element can come into contact with the object. The contact can be direct or indirect. The element for reacting with the sensor or the deformable element may as such be in direct or indirect contact with the object. In case of a direct contact, at least one surface of the element for reacting with the sensor or the deformable element touches at least one surface of the object. In case of an indirect contact, at least some other part is in between the contact surfaces. For the element for reacting with the sensor, this may be the deformable element itself, such that the element for reacting with the sensor is in indirect contact with the object, but the deformable element is in direct contact. In this case it can also be said that the element for reacting with the sensor is embedded in the deformable element. Thereby, the element for reacting with the sensor may be partially or fully embedded in the deformable element. In the latter case, all surfaces of the element for reacting with the sensor are in contact with the deformable element. It can also be said that the material of the deformable element surrounds the element for reacting with the sensor. The other way around, if the deformable element is in indirect contact with the object, the element for reacting with the sensor may be in direct contact with the object. It is however also encompassed that other pieces are in direct contact with the object, whereas the element for reacting with the sensor as well as the deformable element are only in indirect contact with the object. For example, the element for reacting with the sensor may be embedded in a piece of plastic, which is contacting the deformable element. In another example, the piece of plastic is still contacting the deformable element and the object, but the element for reacting with the sensor is embedded in the deformable element, or the element is contacting the deformable element and the piece of plastic. In all three cases, the object will directly contact the piece of plastic but neither the element for reacting with the sensor nor the deformable element directly.

Since the deformable element extends at least partially between the sensor and the element or even surrounds the element, it holds the element in a particular position with respect to the sensor. This position may be defined as a first position of the element with respect to the sensor. It can also be said that the deformable element holds the element in a particular distance from the sensor. If the deformable element is deformed, the element as such performs a coaligned movement in the direction of deformation of the deformable element. If the deformation is a compression, then the distance of the element to the sensor is decreased, whereas if the deformation is a tension, then the distance is increased.

Deformation of the deformable element means that at least one spatial extension of the deformable element is changed in at least one respective spatial dimension. As such, the deformable element of the sensor arrangement may be soft in the sense that is it deformable. The deformability and in particular how much the deformable element can be deformed depends upon the material used for the deformable element. For example, the deformable element can be made of a flexible material. A flexible material is a material which returns to its initial shape once the external force is released. Hence, the deformable element may return to its initial shape if any external force is released. Therefore, the deformable element may also be called a flexible element or an elastic element. In another example, the deformable element may be an elastomer. An elastomer is typically made of monomers linked by weak intermolecular forces. Due to the weak intermolecular forces of the chemical elements of the elastomer, conformational changes of the compounds are possible without or with only partially breaking covalent bonds. This results in that an elastomer may be both viscous and elastic at the same time. Therefore, an elastomer may be deformed by an external force.

The deformation of the deformable element causes the element for reacting with the sensor to move to a second position different to the first position. If the deformable element is compressed, then the second position of the element is closer to the sensor than the first position of the element. If a tension force is applied, then the second position of the element is further away from the sensor than the first position. The change of position can be detected by the sensor of the sensor arrangement by reacting with the element. When reacting with the sensor, the element influences the measurement of the sensor. It could also be said that the element couples with the sensor through a physical effect, which is characteristic of the sensor and the element. This coupling of the element with the sensor depends on the position of the element with respect to the sensor. It could also be said that through the position-dependent coupling, the measurement of the sensor is a unique function of the position of the element with respect to the sensor. In this sense it can be said that the sensor as used in the soft sensor element is a distance measuring sensor. Such a sensor returns an electronic signal proportional to the position of the element with respect to the sensor.

If no external force is applied to the soft sensor element, the deformable element is not deformed and the element is located at the first position with respect to the sensor. Hence, a first signal can be measured by the sensor, which corresponds to a zero-force measurement. If a finite external force is applied to the element, the deformable element is deformed, and the element moves to the second position different from the first position. This second position of the element with respect to the sensor leads to a second signal of the sensor, which corresponds to the applied external force. Hence, the spatial difference between the first and the second position can uniquely be mapped to the respective applied external forces. The spatial difference encompasses any axial and/or rotational differences between the two positions. The spatial difference can also be referred to as displacement of the element. The mapping can be done using a non-linear model, since the force may not be proportional to the displacement of the element but follow a non-linear function. Since a change of the interaction of the element with the sensor can be measured with high accuracy, a high accuracy measurement, derivation, calculation, or estimation of the applied force can be undertaken. In other words, an alteration of the influence of the element on the sensor allows to infer the external stimulus leading to the alteration, namely the applied external force. For example, as described above, the sensor may be sensitive to the displacement of the element with respect to the sensor.

A soft sensor element may use a magnetic field for measuring changes in the position of the element for reacting with the sensor. The magnetic field may be a magnetic field caused by a permanent magnet (e.g. the element for reacting with the sensor may be a permanent magnet) or it may be a magnetic field that is induced by changes of an electrical field (e.g. the sensor may generate a magnetic field that couples with the element for reacting with the sensor (e.g. by generating of eddy currents in said element)).

According to the invention, a plurality of soft sensor elements is arranged in a sensor array. Such an arrangement not only allows for precisely measuring forces that act on a single sensor, but it can also be measured how a force acts upon multiple sensors. For example, the spatial distribution of an applied force can be measured with high precision because the sensor array is spatially sensitive. This allows to localize positions in which an applied force exceeds threshold or when the sensor array performs either a continuous measurement or multiple measurements in discrete time instances, allowing the sensor array to identify how an applied force changes over time or propagates in time. Since the deformable element may provide passivation and/or encapsulation of the sensor, neighboring soft sensor elements may be placed in close proximity to one another, which provides a high resolution of the force determination and even enables to determine the location of an applied force.

One of the benefits of the current invention is that the sensor array, because of the deformable element, allows to be folded or rolled, such that the sensor array can be adjusted to match arbitrary surfaces.

Due to its deformability the sensor array according to the invention is particularly useful for measuring forces applied onto objects which have an arbitrary shape. This may not only be the case in the automotive industry, but also in medical applications. For example, in palpation in minimally invasive surgery, because it allows to determine absolute or relative stiffness of an object or portions of an objections. Stiffness thereby is the extent to which an object resists deformation in response to an applied force. Based on the measurements, abnormal tissue formations can be identified, which requires high resolution in order to identify even small abnormalities. By being foldable or rollable, the sensor array is enabled to be adjusted to arbitrary surfaces, such as the outer surface of diagnostic devices and instrumentation or even to a surface of a glove used by a surgent

In order to further improve the spatial sensitivity of the sensor array, the plurality of soft sensor elements may be spatially distributed in a predetermined manner. In a preferred embodiment of the invention, the soft sensor elements of the plurality of soft sensor elements are arranged in a line. For example, the sensor array may have a spatial extend along a spatial direction, then the soft sensor elements may be arranged in a line parallel to this spatial direction. This allows for measuring how an applied force acts along the line defined by the plurality of soft sensor elements or how an applied force propagates along said line.

In another preferred embodiment of the invention, the soft sensors elements of the plurality of soft sensor elements are arranged in a grid. The grid may be a two-dimensional grid. The grid may be a so-called regular grid with a structured topology. Such a regular grid may be formed by parallel and orthogonal lines, such as a cartesian grid in which crossing lines form a 90 degree angle. In other regular grids, it may also be possible that crossing lines form other angles, as is for example the case in a hexagonal grid or a rhombic grid. Alternatively, the grid may be an irregular grid.

In a grid, the soft sensor elements may be arranged in a plane. Alternatively, the grid may be curved, e.g. convex or concave. It may also be possible that the soft sensor elements of the sensor array are arranged in a plane grid and may be foldable into a curved shape. In this case it can also be said that the grid spans or covers the surface onto which the sensor array is applied.

Compared to the aforementioned embodiment example, in which the plurality of soft sensor elements is arranged along a line, the grid-like arrangement allows to measure the distribution of the applied force or the propagation of the applied force along two spatial directions, namely the two spatial directions that are spanned by the grid. Also, more complicated arrangements may be used, which correspond to a three-dimensional configuration. For example, the sensor array may be configured on a curved surface. The curved surface may be convex or concave. One example is a spherical arrangement. For example, the sensor array may be arranged on the fingertip of a robotic gripper and may smoothly adjust to the shape of the fingertip, such that the deformable element forms an outer layer allowing to register forces of the grip of the gripper. The sensor arrangement may also be adapted to cover a surface of a glove at least partially. It may also be possible that a spherical or otherwise shaped sensor array may wrap an element, such that the element is located inside the wrapped surface, such that a motion of the enclosed element may exert a force on the deformable element.

In some preferred embodiments of the invention, the plurality of soft sensor elements may be arranged on a substrate. The substrate may, for example, be a carrier substrate such as a printed circuit board (PCB). The sensors of the plurality of soft sensor elements may be mounted on the substrate. Thereby, a flip-chip design may be used, meaning that the sensor is a die that has an active side and the active side is placed on the substrate. In this regard, the active side refers to the side of the sensor that comprises the circuitry and the connections to external circuitry. The active side may also be configured to register the displacement of the element for reacting with the sensor. However, it is also encompassed that the sensors are mounted with their non-active side onto the substrate and are connected via wire bonds with circuitry of the substrate. Also, it may be possible that the active side is not configured to also register the displacement of the element for reacting with the sensor and in fact the sensor may comprise one side for connecting to the substrate and the opposing side for registering the displacement. Also in this case the active side may either be connected directly to the substrate in a flip-chip design or the side may face away from the substrate and may be connected via wires to the substrate.

Sometimes, it may be desired that the sensor array can be folded or rolled, for example in order to allow the sensor array to smoothly adjust its surface to the surface of an arbitrarily shaped object or in order to allow the sensor array to grip around an object or be mounted on a device (e.g. a medical instrument) or a (nonplanar) gripper. In this case, a thin sensor array may be desired. Therefore, the substrate may have a thickness of approximately 60 to 600 µm, while the deformable element may have a thickness of approximately 4 mm. Preferably, the ratio between the thickness of the substrate to the thickness of the deformable element is 0.1 % to 15 %, more preferably 1 % to 5 %.

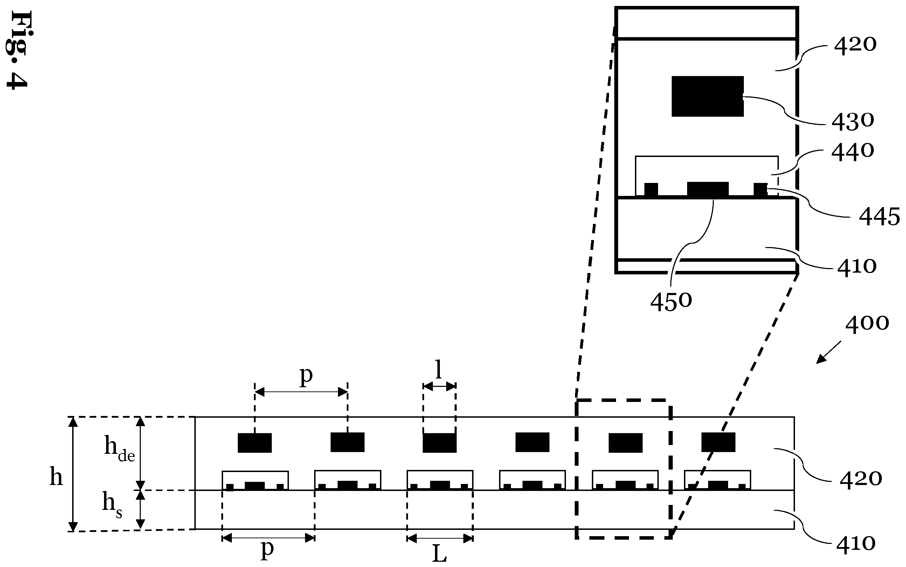

In some preferred embodiments of the invention, a pitch between two neighboring elements of the plurality of soft sensor elements may be equidistant. The pitch may, for example, be measured from a center-point of a soft sensor element to the center-point of a neighboring soft sensor element. Alternatively, the pitch may be measured from an edge of a soft sensor element to a corresponding edge of a neighboring soft sensor element. This aspect will be described in more detail with respect to the figures, in particular figure 4. An equidistant pitch allows to provide a measurement of the spatial characteristics of the applied force with a particular resolution that is associated with the equidistant pitch.

Further, each soft sensor element may have a particular size, for example represented by a length of an edge of the sensor or a diameter. Preferably, each sensor of the soft sensor elements has the same size. Using soft sensor elements of the same or a similar type improves the spatial resolution of the measurements performed by the sensor array. The size of the sensor may be denoted as L. The pitch p between two neighboring soft sensor elements of the plurality of soft sensor elements may be given as p ≤ 3L or preferably p ≤ 2L or p ≤ 1.5L. Hence, in some examples the pitch may be 1.1, 1.5, 2, or 3 times the size of the soft sensor element. In other words, the pitch of the arrangement of the soft sensor elements has the same scale as the size of the soft sensor elements, which allows to produce sensor arrays with a high resolution - the resolution being inversely proportional to the pitch. Since the deformable element can provide passivation and encapsulation of the sensors, the neighboring soft sensor elements can be placed in close proximity, which allows to achieve high resolutions.

According to the claimed invention, the sensor of each of the plurality of soft sensor elements is a multipixel sensor. A multipixel sensor has more than one sensitive element that are able to register a change in position of the element for reacting with the sensor. For example, a multipixel sensor may have two sensitive elements (hereinafter also referred to as pixel). Preferably, the multipixel sensor may have four sensitive elements that are arranged in a 2x2 grid, while other numbers of sensitive elements are also encompassed, e.g. but not limited to a 1x2, 2x3 or 3x3 grid. In a multipixel sensor, the two or more sensitive elements may be located on the same die. Using a multipixel sensor may improve the spatial resolution of the sensor array and may even reduce effects that are caused by external influences other than the applied force. For example, when the soft sensor element makes use of a magnetic field for measuring changes of the position of the element for reacting with the sensor, effects caused by external magnetic fields may be reduced by measuring differential field.

As such, each sensitive element of a multipixel sensor may be configured to determine a force acting on the deformable element and/or a location of the force. Determining a location of the force may be performed based on gradients or differences in the data obtained from two or more sensitive elements of one or more multipixel sensors. An advantage is that the influence of external stray fields can be reduced or even cancelled.

Neighboring pixels of the multipixel sensors may have a first spacing s₁. A second spacing s₂ of a last pixel of a multipixel sensor of a first sensor element and a first pixel of a multipixel sensor of a neighboring second sensor element may be smaller or equal to the first spacing s₁. In this way, a homogeneous arrangement of the sensitive elements is achieved. For example, in case that a plurality of 1x2 multipixel sensors are used, the first spacing s₁ refers to the spacing of the neighboring two sensitive elements of one 1x2 multipixel sensor. The second spacing s₂ refers to the spacing between the second sensitive element of a first 1x2 multipixel sensor and a first sensitive element of a second 1x2 multipixel sensor. The same applies to a 2x2 multipixel sensor and other grid-like multipixel sensors, in which the first and second spacings may apply in both directions of the grid spanned by the 2x2 sensitive elements. Ensuring that the first spacing s₁ is the same as the second spacing s₂, allows to ensure a homogeneous resolution of the sensor array.

In some preferred embodiments, the pitch p between neighboring sensors may be related to the spacing s₁ between the sensitive elements of a multipixel sensor. For example, the pitch p may be p ≤ 3 s₁.

In another preferred embodiment of the invention, the plurality of soft sensor elements may be embedded in a common deformable element. In other words, the plurality of soft sensor elements may share a common deformable element.

Using a common deformable element may, however, in some cases suffer from so-called cross-talk between neighboring soft sensor elements when the applied force at a first location causes continued deformation of the deformable element in a second location in short distance to the first location. Since this type of cross-talk is caused by a mechanical coupling of neighboring soft sensor elements via the common deformable element, the sensor array in some preferred embodiment may have mechanically decoupled portions. For example, subsets of the plurality of soft sensor elements are arranged in at least two portions of the sensor array and the at least two portions may be mechanically decoupled. Mechanically decoupling the portions of the sensor array may, for example, be performed by separating portions of the sensor array by recesses in the common deformable element. In this way, a deformation of the deformable element in a first portion does not cause a deformation of the deformable element in a neighboring second portion. This ensures that portions of the deformable element will only experience deformation when an external force is applied to said portion. The deformation will not propagate through the common deformable element, because of the recesses that hinder further propagation. Because the recesses separate the deformable element into portions, it may also be said that the common deformable element comprises pillars, wherein each pillar corresponds to a portion that is separated from other portions by one or more recesses. The pillars may form a line in case that the two or more recesses are arranged essentially parallel to one another or in another example, the pillars may form a grid, when two or more recesses are arranged in a grid as well.

In a preferred embodiment, the soft sensor array may comprise a plurality of portions and each portion comprises only one soft sensor element. In this case, a high spatial resolution with minimal cross-talk can be obtained.

In another preferred embodiment of the invention, the sensor of the soft sensor element may be a passive magnetic sensor and the element for reacting with the sensor may be a magnetic field emanating element, for example a permanent magnet. A magnetic sensor is a sensor which measures at least one property of a magnetic field emanated by the element. By passive magnetic sensor, it is meant that the sensor detects at least one property of the magnetic field caused by the element but does not create the to be measured magnetic field on its own. In general, a magnetic field is a vector field. This means that at each point of space, the magnetic field is characterized by a three-dimensional vector of magnetic field strengths. The passive magnetic sensor may measure one or more magnetic fluxes obtained by projecting the magnetic vector field onto one or more surfaces associated with the passive magnetic sensor. Hence, it could be said that the measured at least one property is the magnetic flux through a respective surface. The measured magnetic flux is proportional to the density of magnetic field lines passing through the respective surface and cutting the respective surface in an orthogonal angle. Each of the magnetic fluxes through the respective surfaces causes the passive magnetic sensor to output a corresponding signal, e.g., a current or a corresponding voltage signal. In particular, the outputted signal may be proportional to the distance of the element to the sensor. If the element changes its position, the magnetic field lines change their position. In this way, a positional change of the element leads directly to a change of the magnetic fluxes measured at the passive magnetic sensor. The outputted signal then gives either a direct indication of how the element has changed its position or can be processed further or combined for determining the position of the element relative to the sensor. Thereby, an algorithm for determining the position of the element from the measured flux signals may rely on difference values between the signals and/or compute a gradient based on the signals measured for a displaced element in case of a deformed deformable element, and for an element at its initial position in case of a non-deformed deformable element. Another algorithm may then be used to infer the external applied force from the position determined by the algorithm. However, the external applied force may also be inferred directly from the measured flux signals without computing the position of the element as an intermediate value. In a general way, it could be said that a change of the interaction of the element with the passive magnetic sensor leads to a change of the at least one property of the magnetic field measured by the passive magnetic sensor. An algorithm may then be used to infer the external force responsible for the change of the interaction from the measured at least one property of the magnetic field.

In addition, or as an alternative, a flux gradient may be measured directly using a transducer which is sensitive to a magnetic field gradient. The use of difference values or of a gradient achieves a stray field-immune position determination since the influence of static stray magnetic fields is cancelled when subtracting the measured signals. In addition, or alternatively to the magnetic flux, the passive magnetic sensor may also measure the orientation of the vector of magnetic field strengths. Measuring the orientation of the vector of magnetic field strengths results in one or more angles describing the orientation of the magnetic field in space. Based on this orientation, the force applied to the deformable element can be derived. By using the change in orientation of the element in relation the sensor, it is also possible to derive in which angles the object deforms the deformable element. In other words, whether a uniform or non-uniform force is applied.

A passive magnetic sensor may comprise at least one sensor element, which measures the at least one physical property of the magnetic field. The at least one sensor element may be a magneto-resistive sensor or a Hall sensor, or all other devices, which are suitable to measure at least one property of the magnetic field emanated by the element.

In another preferred embodiment of the invention, the sensor of the soft sensor element may be an active magnetic sensor and the element may be a target. An active magnetic sensor measures at least one physical property of a magnetic field. Thereby, in contrast to the passive magnetic sensor described above, an active magnetic sensor creates at least one magnetic field on its own. In other words, an active magnetic sensor does emanate a magnetic field on its own. The magnetic interaction of the emanated magnetic field with the target is observed by the active magnetic sensor. The active magnetic sensor may comprise one sensor element that is configured to both generate a magnetic field, and to measure the change of the magnetic field due to the target. For example, the one sensor element may be adapted to act as a generator of the magnetic field for a first time interval, and as a detector of the change of the magnetic field due to the target for a second time interval. Alternatively, the active magnetic sensor may also comprise at least two sensor elements - the at least two sensor elements may either be distinct sensor elements or may be sensitive elements of a multipixel sensor as described above. Thereby, at least one of the at least two sensor elements may be configured to generate a magnetic field, and at least one other of the at least two sensor elements may be configured to measure the change of the magnetic field due to the target. The sensor element configured for measuring the at least one physical property may be similar to the sensor element of the passive magnetic sensor described above. Thereby, sensor elements may be configured to measure properties of magnetic fields, magnetic field gradients, and/or differential magnetic fields.

The generated magnetic field is affected by the target, and at least one physical property of the affected magnetic field is measured by the sensor element configured for measuring the at least one physical property. The form of the target may be not rotationally invariant. In particular, the target can be planar or almost planar. Thereby, the target can have a form, which affects the magnetic field in a preferred direction, which may be substantially the same for the whole target. For example, the target could be structured such that inductive currents preferably flow in a particular linear direction, such that the effect of the target on the generated magnetic field is also directional. For this, the target may comprise at least one slit extending from one end of the target to another end of the target. However, different target designs are equally well possible.

It could also be said that the target affects the magnetic flux coupling between the generator of the magnetic field and the detector measuring the at least one physical property of the magnetic field. The target may comprise a soft magnetic material or a non-magnetic electrically conductive material. Thereby, soft magnetic material means that the magnetic material of which the target is made can be easily magnetized and demagnetized. It could also be said that a soft magnetic material is characterized by that its magnetization decays rapidly in time if an external magnetic field is removed. A soft magnetic material may have a higher relative magnetic permeability and/or a lower coercivity. Coercivity, also called the magnetic coercivity, coercive field or coercive force, is a measure of the ability of a ferromagnetic material to withstand an external magnetic field without becoming demagnetized. Ferromagnetic materials with high coercivity are called magnetically hard and are for example used to make permanent magnets. Materials with low coercivity are said to be magnetically soft. It could also be said that a soft magnetic material may have a low remanent magnetization. Typically, but not restricted to, a magnetic material is called soft magnetic material if its coercivity is smaller than 1000 A/m. The latter shall however only serve as an example and shall not be understood to be limiting.

If the target is made of a soft magnetic material, the target may affect the magnetic flux coupling by concentrating the magnetic field lines of the generated magnetic field. The soft magnetic material may consist of an isotropic material, which does not feature any preferred direction. If the target is made of a non-magnetic electrically conductive material, energy may be dissipated by induced currents in the electrically conductive material of the target. The induced currents may be eddy currents. In this case, the target affects the magnetic flux coupling by introducing losses of the generated magnetic field due to dissipation. Optionally, the form of the target could be such that the magnetic field lines of the generated magnetic field are aligned into a preferred direction. Additionally, or alternatively, one could also say that the target could act as a magnetic field line rectifier, which aligns the magnetic field lines into a preferred direction. If the target is positioned and/or oriented such that a preferred direction of the magnetic field lines is in the direction of the sensor element, which measures the at least one physical property, the measured at least one physical property will have a maximum value.

In another preferred embodiment of the invention, the sensor array may comprise a plurality of additional elements reacting with the sensors. The additional elements may for example be additional magnets or additional targets. The additional elements may be located between the elements for reacting with the sensor of two neighboring soft sensor elements. For example, when a plurality of soft sensor elements is arranged in the sensor array, the additional elements may be located at positions between neighboring soft sensor elements. If additional elements are used, they are preferably placed between each pair of neighboring soft sensor elements. However, it is also encompassed that only some pairs of neighboring soft sensor elements have an additional element in between. In this case, there may be a regularity between pairs that have an additional element in between and pairs that do not have such an additional element in between.

In case that the additional elements are magnetic elements, they may have magnetization that is different from the magnetization of the elements of the soft sensor elements. Alternatively, they may be made from another magnetic material than the elements for reacting with the sensor of the soft sensor elements. The other magnetic material may have different magnetical properties (e.g. magnetic permeability) that is different from the magnetical properties of the element for reacting with the sensor.

In case that the additional elements are targets, they may have different electrical or magnetical properties than the targets that are used in the soft sensor elements.

According to the invention as claimed, the sensor array comprises one or more evaluation circuits. The one or more evaluation circuits may be configured for receiving at least one signal from one or more sensors and for evaluating said signals to derive, calculate, or estimate the applied force. Thereby, each soft sensor element may comprise a separate evaluation circuit, which outputs the force applied to this sensor element. **In** some embodiments, signals provided by these multiple evaluation circuits may then be forwarded to a common evaluation circuit of the sensor array for further processing or may be forwarded to external circuitry directly.

Alternative or additionally, the sensor array may also comprise a common evaluation circuit that is connected to the plurality of soft sensor elements and may be configured for communicating with the plurality of soft sensor elements.

Communicating in this sense means that the evaluation circuit is configured to receive signals from the plurality of soft sensor elements or to read out data from the plurality of soft sensor elements. Thereby, the data may be already the force applied to the individual soft sensor elements in case they encompass their own individual evaluation circuits or the raw data, menacing the data provided by the sensors. The common evaluation circuit may further be adapted to either just forward the gathered data from the plurality of soft sensor elements or to evaluate the data itself to derive the force applied to the sensor array. Thereby, the common evaluation circuit may perform calculations that are necessary for determining the distance, position, etc. of the elements for reacting with the sensor, thereby enabling the force measurement. Further, the evaluation circuit may perform differential measurements between neighboring soft sensor elements or sensitive elements of multipixel sensors and may also be used for driving the sensor, for example when the active magnetic sensors are used.

According to the claimed invention, the evaluation circuit is configured to compute the force based on a plurality of signals from the multipixel sensors, e.g. based on differences, or sums, or combinations. As mentioned above, the one or more evaluation circuits are configured to determine a location of the applied force on the basis of gradients or differences in the data provided by two or more sensitive elements of two or more multipixel sensors.

In any case, the sensors may be connected to a digital bus for communicating the data. Each sensor may have a unique ID and may be arranged for transmitting the unique ID.

In another preferred embodiment of the invention, another deformable element is in contact with the deformable element and/or with the element. The another deformable element may be at least partially extending between the deformable element and the object. It can also be said that in this case the deformable element is a first deformable element and the another deformable element is a second deformable element. The second deformable element may come into contact with the object when the object is moved towards the second deformable element. When the object exerts a force onto the second deformable element during such a contact, the second deformable element exerts a force onto the first deformable element and/or the element, and the first deformable element is deformed, as described above. Thereby, the second deformable element may also be deformed. However, the second deformable element can be less deformable than the first deformable element or may not be deformed at all. Without any applied force, the thickness of the second deformable element perpendicular to the surface of the sensor may be smaller than the thickness of the first deformable element. The second deformable element may have a different bulk and/or shear modulus as compared to the first deformable element. In particular, the bulk modulus of the second deformable element may be higher than the bulk modulus of the first deformable element. It might also be said that the second deformable element may be more rigid and/or less flexible than the first deformable element. Hence, being more rigid, the second deformable element is less likely to be damaged by the contact with the object than the first deformable element. It could also be said that the second deformable element provides a protective layer to the first deformable element, which prevents damaging of the first deformable element by avoiding direct contact between the first deformable element and the object. Hence, by means of the second deformable element, the deformation properties of the first deformable element are protected. Furthermore, the second deformable element may act as a transducer of the force exerted by the object onto the second deformable element. It could also be said that the second deformable element distributes the force exerted by the object in a homogeneous and uniform manner onto the first deformable element. For example, if the contact of the second deformable element with the object is over a first contact surface and the contact of the element and/or the first deformable element with the second deformable element is over a second contact surface, the second deformable element distributes the force received over the first contact surface onto the second contact surface. Depending on the shape of the object, the first contact surface may be smaller than the second contact surface. In this case, the second deformable element lowers the force or pressure exerted onto the first deformable element and/or the element as compared to if the object would be in direct contact with the first deformable element and/or the element itself. Thereby, the risk to damage the first deformable element is lowered. In other words, the second deformable element avoids point-like stresses of the object onto the first deformable element and/or the element. In addition, or alternatively, the second deformable element may have a specific friction coefficient adapted to the object. In this way, the surface roughness of the second deformable element can be adjusted to the surface roughness of the object which contacts the second deformable element. For example, if the object surface has a low friction coefficient, the friction coefficient of the second deformable element may be raised such that a stable contact of the object and the second deformable element is retained. If the object surface has a high friction coefficient, the friction coefficient of the second deformable element may be lowered, while still retaining the same stable contact. In this way, the grip between the object and the second deformable element may be stabilized, even if the type of object changes. Hence, the second deformable element can be adjusted to the type of the object, without changing the first deformable element. This renders the soft sensor element versatile for a large range of different objects, while still using the same deformable element. It is also encompassed that the second deformable element can be reversible attached to the first deformable element. In other words, the second deformable element may be exchangeable. A different second deformable element may as such be chosen for different applications or for different objects.

In a further preferred embodiment of the invention, the deformable element may be characterized by its shape and/or its bulk modulus and/or its shear modulus. The shape of the deformable element in the non-deformed state may be at least one of a cylinder, a cube, a pyramid, or a dome. The shape and the other chosen properties are thereby adapted to the implementation conditions.

In a further preferred embodiment of the invention, the deformable element may be attached to the sensor. For example, the deformable element may be glued to the sensor. Thereby, for example one adhesive layer, such as a tape, may be used. It is also possible that the deformable element only touches the sensor, without being stably attached to the sensor. As a further example, the deformable element may also not touch the sensor at all. In this case, a free space may exist in between the deformable element and the sensor and holding means to hold the deformable element spaced apart from the sensor. The aforementioned examples shall not be understood as a limitation.

In a further preferred embodiment of the invention, the soft sensor element may further comprise a mechanical stop, wherein the mechanical stop limits the deformation of the deformable element. A mechanical stop acts as such as a physical barrier to limit the amount of deformation possible, i.e., the amount of force which acts upon the deformable element. The mechanical stop thereby exerts a counterforce to the force applied to the deformable element. The force and the counterforce thereby at least partially cancel each other out. It can also be said that the mechanical stop acts as a force absorber which absorbs a least a part of the force applied to the deformable element. The mechanical stop may be a rigid element, which has an extent with respect to the sensor which is shorter than the extent of the non-deformed deformable element with respect to the sensor. This allows the deformable element at least to be partially deformed by an amount which equals to the difference in extent of the mechanical stop and the deformable element in the non-deformed state. Instead of being a rigid element, the mechanical stop may also be an element which consists of a material that is less elastic than the deformable element itself. In this case, the mechanical stop does not function as a hard stop but as a damper, which damps the deformation of the deformable element, since more force must be exerted to compress both the deformable element as well as the mechanical stop.

Further, the abovementioned needs are also addressed by a method for measuring a force using a soft sensor element. According to the method, a sensor array is provided, wherein the sensor array comprises a plurality of soft sensor elements. Each of the soft sensor elements comprises a sensor, a deformable element, and at least one element for reacting with the sensor. The deformable element extends at least partially between the sensor and the at least one element for reacting with the sensor.

Further, a plurality of signals is received from the sensors. The signals are received when the deformable element is deformed by an external force. **In** other words, the signals may be feedback signals providing feedback indicative of the applied external force.

Based on a predefined correlation between values of the applied force and values of the signals, the strength of the force is derived.

The sensor array that is used in the method according to the invention may have any characteristic that has already been described above with respect to the sensor array according to the invention.

### BRIEF DESCRIPTION OF THE DRAWINGS

The following description and the annexed figures set forth in detail certain illustrative aspects of the soft sensor arrangement, the gripper, and the respective two methods described above.

In the figures, like reference characters generally refer to the same parts throughout the different figures. The figures are not necessarily to scale. Instead, a general focus is put on an explanation of the universal principles of the invention.

In the following description, various embodiments of the invention are described with reference to the following figures:
- FIG. 1: shows a section view of an embodiment example of a soft sensor element that can be used in a sensor array according to the invention; in the status that is depicted in the figure, no external force is applied to the soft sensor element;
- FIG. 2: shows the section view of the soft sensor element of FIG. 1 with a linear external force applied;
- FIG. 3: shows the section view of the soft sensor element of FIG. 1 with a non-linear external force applied;
- FIG. 4: shows a section view of an embodiment example of a sensor array according to the invention;
- FIG. 5: shows a section view of another embodiment example of a sensor array according to the invention, wherein recesses are formed within the deformable element in order to mechanically decouple portions of the sensor array from one another;
- FIG. 6: shows a section view of another embodiment example of a sensor array according to the invention, wherein recesses are formed within the deformable element in order to mechanically decouple portions of the sensor array from one another; compared to FIG. 4, the soft sensor elements do not comprise a portion of common deformable element;
- FIG. 7: shows a section view of another embodiment example of a sensor array according to the invention, wherein the sensors of the plurality of soft sensor elements are embedded in a passivation layer, while the elements for reacting with the sensors of the plurality of soft sensor elements are embedded in a common deformable element;
- FIG. 8: shows a section view of another embodiment example of a sensor array according to the invention, wherein additional elements are placed in spaces between the elements for reacting with the sensors of the plurality of soft sensor elements;
- FIG. 9: shows a top view of a sensor array according to the claimed invention, wherein the sensors of the plurality of soft sensor elements are configured as multipixel sensors;
- FIG. 10: shows a section view of another embodiment example of a sensor array according to the invention, wherein the elements for reacting with the sensors of the plurality of soft sensor elements are configured as powder material.

### DETAILED DESCRIPTION

The following detailed description refers to the accompanying figures that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

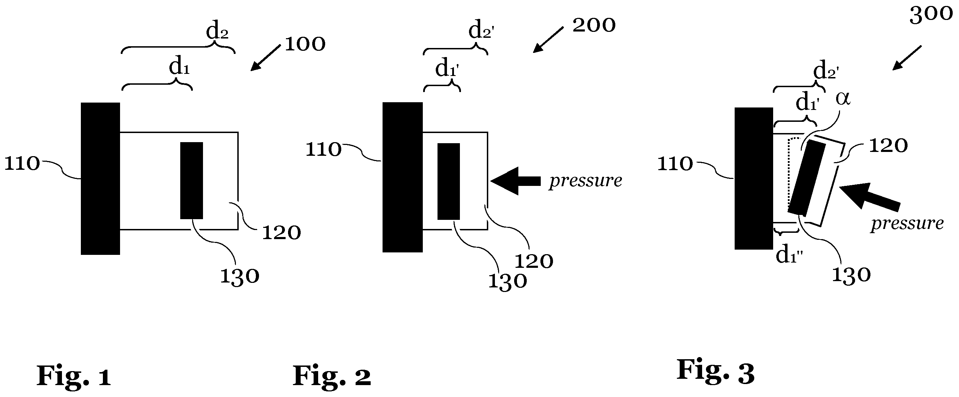

Figure 1 depicts a section view of a soft sensor element 100 according to an embodiment example of the invention. The soft sensor element 100 comprises a sensor 110, a deformable element 120, and an element 130 for reacting with the sensor 110. For example, the deformable element 120 may comprise at least one of an elastomer, a polymer, a rubber and a vulcanizate. The deformable element 120 may also comprise a flexible element, an elastic element or a flexible structure. The flexible element or the flexible structure may be made of metal. For example, the flexible element or the flexible structure may be a made of metallic flexible beams. In the here shown embodiment example, the element 130 is fully embedded in the deformable element 120. Fully embedded means that the deformable element 120 is completely surrounding the element 130, which means all surfaces of the element 130 are in contact with the deformable element 120. It can also be said that the element 130 is enveloped by the material of the deformable element 120. The deformable element 120 is deformable by applying an external force. The applied external force may cause the deformable element 120 to be compressed such that the distance between the element 130 and the sensor 110 changes. This change in distance can be detected by the sensor 110. For example, if the element 130 is a magnet and the sensor 110 is a magnetic sensor, then the reduction in distance between the element 130 and the sensor 110 causes the sensor to detect a different magnetic field, e.g. a different magnetic field strength and/or orientation as compared to before the deformation. Hence, from a change in the measured physical unit, it can be deducted how much the deformable element 120 is deformed. The person skilled in the art will however notice that also other types of sensor 110/element 130 combinations can be used for measuring the amount of distance the deformable element 120 has been compressed.

Each individual deformation of the deformable element 120 corresponds to a different applied external force, which in turn is associated with a respective physical measurement obtained by the sensor 110. Hence, a correlation between applied external force values and corresponding measurement values of the sensor 110 exists. This correlation can be determined during an initial calibration step of the sensor 110 or can be predetermined by knowing the bulk modulus and/or a shear modulus of the deformable element 120. The correlation itself can, for instance, be established as a look-up table including external force values and their associated sensor readings. The correlation between applied external force values and corresponding measurement values of the sensor 110 could be established using a model trained by machine learning. A person skilled in the art also knows other ways to establish the respective correlations, all of which are encompassed hereby. Once an actual measurement of the sensor 110 is obtained, the look-up table can be used to infer an estimate for the external force. However, by knowing the bulk modulus and/or the shear modulus of the deformable element 120 also an algorithm can be used, which outputs the actual force applied in respect to the amount of deformation by ease of calculation. The algorithm may be a non-linear model, which defines the actual force as a non-linear function of the measurement values of the sensor 110. The algorithm or the correlation may be implemented inside an integrated circuit (IC) containing the sensor 110, or outside the integrated circuit containing the sensor 110, or partially inside the integrated circuit containing the sensor 110 (e.g. for calculating the position of the element 130 from the sensor signal), and partially outside the integrated circuit containing the sensor 110 (e.g. for inferring the force from the displacement of the element 130). The sensor 110 may be configured to provide dual sensing, which allows detection of linear forces as well as shear forces, for example a linear force in the direction of the external force and shear forces in one direction or two orthogonal directions in the plane perpendicular to the direction of the external force. The correlation or the algorithm may provide a direct link between the applied external force values and the measurement values of the sensor 110. Optionally, the correlation or the algorithm may compute the displacement of the element 130 as an intermediate step. In this case, a first correlation or a first algorithm determines the position of the element 130 from the measurement values of the sensor 110, and a second correlation or a second algorithm determines the applied external force value from the position of the element 130. Thus, in this case, the determining the position of the element 130 acts as an intermediate step.

The element 130 embedded within the deformable element 120 has in the here shown embodiment example a distance, d₁, from the sensor 110, which is smaller than the distance, d₂, of the second end of the deformable element 120 from the sensor 110.

In a not limiting sense, the distance, d₁, of the element 130 from the sensor 110 may be 3mm, the distance, d₂, of the second end of the deformable element 120 from the sensor may be 4mm A person skilled in the art knows that these dimensions are only named for illustrative purposes and shall not be understood to be limiting if not explicitly mentioned.

Figure 2 shows a section view of the soft sensor element 200 of Figure 1 with an applied external force ('*pressure*'). The applied external force can be uniform, i.e., constant over a surface of application of the force. However, the applied external force can also be non-uniform, i.e., varying over the surface of application of the force. This variation of the force over the surface of application may be linear or non-linear. In other words, each point on the surface of application of the force may be assigned a different force value, which is related to the neighboring force values according to a linear or a non-linear relationship. In the shown example, the external force is uniform over the surface of the deformable element 120 and applied perpendicularly to the surface of the sensor 110. The applied external force compresses the deformable element 120. This causes the distance, d₂, of the second end of the deformable element with respect to the sensor 110 to be reduced to a shorter distance, d_{2'}. Due to the fact that the element 130 is embedded in the deformable element 120 also the distance, d₁, of the element 130 to the sensor 110 is reduced to a shorter distance, d_{1'}.

The sensor 110 is configured to detect the change of distance, d₁ to d_{1'}, by reacting with the element 130. If the sensor 110 is a magnetic sensor and the element 130 is a magnet, then the lower distance between the sensor 110 and the element 130 causes the sensor 110 to detect a higher magnetic field strength, since it is proportional to the distance. The change in magnetic field strength as such allows to conclude the force applied to the deformable element 120. In some cases, if the sensor 110 is a magnetic sensor, it is possible that the sensor 110 detects, additionally or alternatively to the magnetic field strength, a change of orientation of the magnetic field strength vector, i.e., of one or more angles assigned to the magnetic field vector. In this case, the magnetic sensor may be located at an offset with respect to the axis of the magnet. Whereas here only a one-dimensional distance measurement and as such a perpendicularly applied force is described, the person skilled in the art will notice that the element 130 may also be inclined at an angle as shown in Figure 2b.

In Figure 3, the external force ('*pressure*') is applied uniformly but not perpendicular to the surface of the sensor 110. Hence, the applied external force deforms the deformable element 120 in a direction not perpendicular to the surface of the sensor 110. This causes the distance, d₁, of the element 130 to the sensor 110 to be changed in a non-homogeneous way. For example, the upper end of the element 130 is moved to a larger distance, d_{1'}, but the lower end of the element 130 is moved to a lower distance, d_{1"}. Since the distances d_{1'} and d_{1"} are different if a non-linear force is applied, the element 130 is tilted by a non-zero angle α with respect to the sensor 110. Thus, with a non-perpendicular external force the element 130 is not only translated, but also rotated. The sensor 110 is adapted to detect the change of the angle α by the reaction with the element 130. If the sensor 110 is a magnetic sensor and the element 130 is a magnet, the different angle α between the sensor 110 and the element 130 causes the sensor 110 to detect a different magnetic field, since the orientation of the magnetic field lines of the magnet 130 has been changed with respect to the sensor 110. It could also be said that the rotation of the element 130 by the angle α causes the sensor 110 to perceive a rotated three-dimensional magnetic field from the element 130. Under rotations, the absolute magnetic field strength does not change but the orientation of the magnetic field vector in space is changed. Hence, the sensor 110 perceives different magnetic fluxes as compared to no rotation of the element 130, since the projections of the magnetic field vector onto the surfaces, over which the sensor 110 measures the magnetic fluxes, are different. The change in the measured magnetic fluxes allows to infer the change of the position of the element 130. The positional change of the element 130 is uniquely linked to the force exerted onto the deformable element 120. Hence, if a non-perpendicular force is applied to the deformable element 120, a rotation of the element 130 could be used to determine the force applied to the deformable element 120.

Figure 4 shows a section view of an embodiment example of a sensor array according to the invention. The sensor array 400 comprises a plurality of soft sensor elements. Each of the soft sensor elements may be configured similar to or in the same way as the soft sensor elements illustrated in the embodiment examples of figures 1, 2, and 3.

The plurality of soft sensor elements is arranged on a substrate 410. The substrate 410 may provide mechanical and/or electrical support. Further, it may provide connections to circuitry and allows the sensor array to be connected to other electrical devices.

Each of the plurality of soft sensor elements comprises a sensor 440, a deformable element 420 and an element 430 for reacting with the sensor 440. In the embodiment example depicted in figure 4, the deformable element 420 of the soft sensor elements is shown as a common deformable element, in which multiple sensors 440 and multiple elements 430 for reacting with the sensors 440 of the plurality of soft sensor elements are embedded.

In the here shown embodiment example, the sensor 440 of each of the plurality of soft sensor elements may for example be configured as a semiconductor die, a bare die, an unpackaged chip, or unpackaged integrated circuit. The die is mounted on the substrate 410 as a flip chip. The die comprises a sensitive element 450 and electrical connections 445 that connect the die with the circuitry of the substrate 410. In some embodiments, the electrical connections to the substrate may not exceed the periphery of the sensor and/or are in direct contact with the active surface of the sensor.

The substrate 410 has a thickness hₛ and the deformable element 420 has a thickness h_{de}. The sensor array has a thickness h = hₛ + h_{de}. Preferably, as is illustrated in figure 4, the thickness hₛ of the substrate 410 is smaller than the thickness h_{de} of the deformable element 420. Usually, it is preferred to keep the thickness of the sensor array as small as possible. Since the element 430 for reacting with the sensor 440 of each of the plurality of soft sensor elements moves relatively to the sensor 440 when a force is applied, a particular thickness is necessary in order to ensure proper operation. In contrast, the substrate 410 may be substantially thinner. Therefore, the thickness h_{de} of the deformable element 420 preferably is larger than the thickness hₛ of the substrate 410. Preferably the substrate 410 may have a thickness hₛ of approximately 60 to 600 µm, while the deformable element 420 may have a thickness h_{de} of approximately 4 mm. Preferably, the ratio between the thickness hₛ of the substrate 410 to the thickness h_{de} of the deformable element 420 is 0.1 % to 15 %, more preferably 1 % to 5 %.

The sensor 440 has a width in one dimension, which can also be called size, which is represented as length L in figure 3. Preferably, the soft sensor elements of the plurality of soft sensor elements are homogenous, such that all sensors 440 have the same size. The element 430 for reacting with the sensor 440 is illustrated with a smaller size, i.e. length l. This is preferred, but not necessary. It may also be possible that the elements 430 for reacting with the sensors 440 have an equal size or a larger size. In some embodiments, since the sensor is not an encapsulated or packaged die, but the encapsulation is provided by the deformable element, the length L corresponds to the length of the die of the sensor and is not a length of a packaged chip.

Preferably, the pitch p between two neighboring ones of the plurality of soft sensor elements is uniform, meaning that the arrangement of the plurality of soft sensor elements is equidistant as is illustrated in figure 4. The pitch p can be measured from the center of one soft sensor element to a neighboring soft sensor element or from an edge of one soft sensor element (e.g. the edge of a sensor 440) to the same edge of a neighboring soft sensor element.

The sensor array 400 depicted in figure 4 is shown in a section view. In this section view, the plurality of soft sensor elements are arranged in a line along the illustrated cross-section. The sensor 400 may comprise such a single line of plurality of soft sensor elements or the plurality of soft sensor elements may be arranged in a two-dimensional grid with the remaining soft sensor elements that are arranged in the second spatial dimension of the grid are located in a direction perpendicular to the image plane and are therefore not shown.

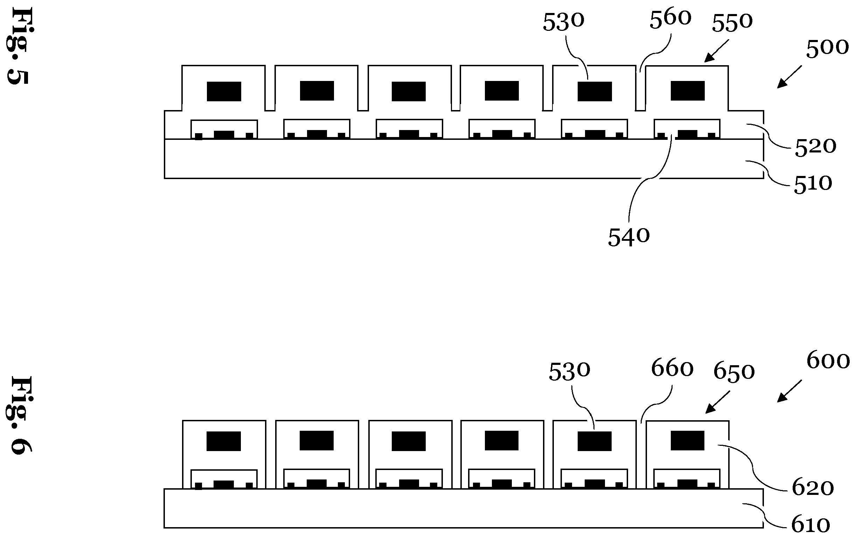

The further embodiment examples depicted in figures 5 to 10 will be described with their differences compared to the embodiment example of figure 4. When not explicitly explained differently, the further embodiment examples of figures 5 to 10 may comprise the same features as the sensor array depicted in figure 4.

Figure 5 shows a section view of another embodiment example of a sensor array according to the invention, wherein recesses are formed within the deformable element in order to mechanically decouple portions of the sensor array from one another.

Similarly to the embodiment example depicted in figure 4, the sensor array 500 comprises a substrate 510 and a plurality of soft sensor elements with a deformable element 520, sensors 540, and elements 530 for reacting with the sensors 540.

In contrast to the embodiment example depicted in figure 4, the sensor array still comprises a common deformable element 520, but the common deformable element 520 comprises recesses 560. The recesses 560 separate the common deformable element 520 in portions 550. Such a separation is a mechanical separation and reduces cross-talk between neighboring soft sensor elements, because a force that is only applied to a portion does not affect the neighboring portions.

Similarly to figure 4, figure 5 depicts a section view in which the plurality of soft sensor elements are arranged in a line. It is possible that the plurality of soft sensor elements is arranged in a two-dimensional grid was mentioned above. In this case, there may be additional recesses that are perpendicular to the recesses 560 depicted in figure 5. These additional recesses can further separate subsets of the plurality of soft sensor elements into portions.

Figure 6 shows a section view of another embodiment example of a sensor array according to the invention, wherein recesses are formed within the deformable element in order to mechanically decouple portions of the sensor array from one another; compared to figure 5, the soft sensor elements do not comprise a portion of common deformable element.

Similarly to the embodiment example depicted in figure 4, the sensor array 600 comprises a substrate 610 and a plurality of soft sensor elements with deformable elements 620, sensors 640, and elements 630 for reacting with the sensors 640. Further, similarly to the embodiment example depicted in figure 5, the plurality of soft sensor elements is separated into portions. In the case illustrated in figure 6, however, the recesses 660 go deeper and separate the deformable element 620 in a way the deformable elements 620 of neighboring soft sensor elements can be regarded as being entirely separated, thereby even further reducing cross-talk. In this case, it may be said that the plurality of soft sensor elements does not comprise a common deformable element.

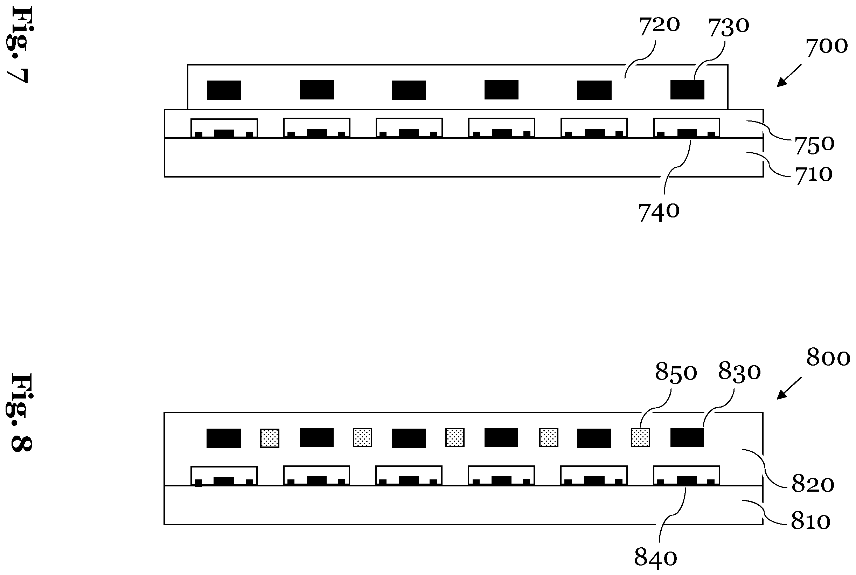

Figure 7 shows a section view of another embodiment example of a sensor array according to the invention, wherein the sensors of the plurality of soft sensor elements are embedded in a passivation layer, while the elements for reacting with the sensors of the plurality of soft sensor elements are embedded in a common deformable element.

Similarly to the embodiment example depicted in figure 4, the sensor array 700 comprises a substrate 710 and a plurality of soft sensor elements with a deformable element 720, sensors 740, and elements 730 for reacting with the sensors 740.

In contrast to the above-described embodiment example, only the elements 730 for reacting with the sensor 740 are embedded in the common deformable element 720. The sensors 740, however, are embedded in another layer, a so-called passivation layer 750. The passivation layer 750 may also be referred to as encapsulation layer and may comprise a thermoplastic material, an epoxy, a mold material, or a photoresist, such as SU-8. Using such an encapsulation layer provides encapsulation for the sensors of the plurality of soft sensor elements. As mentioned above, the deformable element may provide an encapsulation in some embodiments, thereby protecting the sensors against humidity, contaminations or damages and may even electrically isolate the sensors 740 from one another. In the embodiment of figure 7, the encapsulation layer is provided for encapsulation, which may be preferred if particular applications need a highly flexible deformable element but a more sturdy protection layer for the sensors.

Figure 8 shows a section view of another embodiment example of a sensor array according to the invention, wherein additional elements are placed in spaces between the elements for reacting with the sensors of the plurality of soft sensor elements.

Similarly to the embodiment example depicted in figure 4, the sensor array 800 comprises a substrate 810 and a plurality of soft sensor elements with a deformable element 820, sensors 840, and elements 830 for reacting with the sensors 840.

Additionally, the sensor array 800 comprises additional element 850. These additional elements 850 are placed in paces between the elements 830 for reacting with the sensors 840 of the plurality of soft sensor elements. The additional elements 850 may, for example, be magnets or targets, which have other characteristics as the elements 830. For example, the additional elements may provide a magnetic field that has a different direction than the elements of the soft sensor elements. In one example, the field of the additional elements 850 may be rotated by 90° as compared to the magnetic field of the elements 830 for reacting with the sensors 840. The additional elements 850 may be placed at equidistant locations between the elements 830.

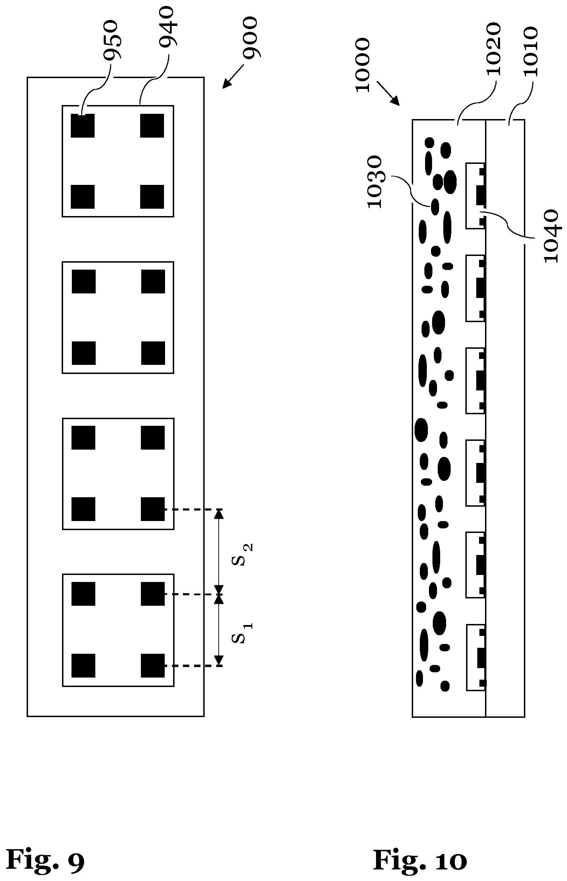

Figure 9 shows a top view of a sensor array according to the claimed invention, wherein the sensors of the plurality of soft sensor elements are configured as multipixel sensors.

The sensor array 900 comprises sensors that have a so-called multipixel configuration. This means that each sensor 940 comprises multiple sensitive elements 950. In figure 9, each multipixel sensor comprises four sensitive elements 950. The four sensitive elements 950 are arranged symmetrically in the four corners of a sensor 940 or placed on the diagonals. The spacing s₁ between neighboring sensitive elements 950 is preferably uniform in all sensors 940. Further, the spacing s₂ between adjacent sensitive elements 950 of neighboring sensors 940, preferably, is uniform over the entire sensor array 900 in order to provide uniform resolution. Further preferred, the spacing s₁ between sensitive elements 950 of the same sensor 940 is equal to the spacing s₂ of adjacent sensitive elements 950 of neighboring sensors 940.

For the multipixel sensor as shown in Figure 9 each pixel may be a magnetic field sensor. Thereby, each pixel may measure at least one component of the magnetic field.

Figure 10 shows a section view of another embodiment example of a sensor array according to the invention, wherein the elements for reacting with the sensors of the plurality of soft sensor elements are configured as powder material.

Similarly to the embodiment example depicted in figure 4, the sensor array 1000 comprises a substrate 1010 and a plurality of soft sensor elements with a deformable element 1020, sensors 1040, and elements 1030 for reacting with the sensors 1040.

In contrast to the above-depicted embodiment examples, the elements 1030 for reacting with the sensors 1040 are formed by a powder material. The powder material may, for example, be a magnetic or magnetizable material. Using such a powder material may improve the bending behavior of the sensor array and may therefore improve the folding or rolling of the sensor array.

Each of the abovementioned embodiment example can be used to determine the strength of an applied external force. Moreover, each embodiment example can be used to localize the point at which the external force is applied. If measured continuously or in discrete intervals, each of the abovementioned embodiments is capable of determining the propagation of the external force, meaning that motions can be registered. For example, if used in a gripper, an insufficient grip may be detected early.

## Claims

1. A sensor array for measuring a force, comprising:
one or more evaluation circuits; and
a plurality of soft sensor elements, the soft sensor elements (100) each comprising:
a sensor (110, 440, 940), wherein the sensor (110, 440, 940) is a multipixel sensor having two or more sensitive elements;
a deformable element (120, 420), wherein the deformable element (120, 420) is deformable by the force, and
at least one element (130, 430) for reacting with the sensor (110, 440, 940) for measuring the force by a deformation of the deformable element (120, 420), wherein the deformable element (120, 420) extends at least partially between the sensor (110, 440) and the at least one element (130, 430, 940);
wherein the one or more evaluation circuits are configured to determine a location of the force based on gradients or differences in data obtained from the two or more sensitive elements of the multipixel sensor.

2. The sensor array according to claim 1, wherein the one or more evaluation circuits comprise a common evaluation circuit connected to the plurality of soft sensor elements, or
wherein each soft sensor element (100) of the plurality of soft sensor elements comprises one or more evaluation circuits of the one or more evaluation circuits.

3. The sensor array according to claim 1, wherein the at least one element (130, 430) is embedded into the deformable element (120, 420).

4. The sensor array according to any of the preceding claims, wherein the soft sensor elements of the plurality of soft sensor elements are arranged in a line or in a grid.

5. The sensor array according to any of the preceding claims, wherein a pitch (p) between two neighboring elements of the plurality of soft sensor elements is equidistant.

6. The sensor array according to any of the preceding claims, wherein the sensor (110, 440) of each soft sensor element has a size (L), wherein the size (L) is a length of an edge of the sensor (110, 440, 940) or a diameter of the sensor (110, 440, 940), and wherein a pitch (p) between two neighboring elements of the plurality of soft sensor elements is p ≤ 3 L.

7. The sensor array according to any of the aforementioned claims, wherein two neighboring pixels of the multipixel sensors have a first spacing (s₁) and wherein a second spacing (s₂) of a last pixel of a multipixel sensor of a first sensor element and first pixel of a multipixel sensor of a neighboring second sensor element is smaller or equal to the first spacing (s₁).

8. The sensor array according to any of the preceding claims, wherein the plurality of soft sensor elements is embedded in a common deformable element (120, 420).

9. The sensor array according to claim 8, wherein subsets of the plurality of soft sensor elements are arranged in at least two portions of the sensor array and wherein the at least two portions are mechanically decoupled.

10. The sensor array according to claim 9, wherein portions of the sensor array are separated by recesses (560, 660) in the common deformable element (120, 420).

11. The sensor array according to any of the preceding claims, wherein the sensor (110, 440, 940) is a passive magnetic sensor and the at least one element (130, 430) is a magnetic field emanating element.

12. The sensor array according to any of claims 1 to 10, wherein the sensor (110, 440, 940) is an active magnetic sensor and the at least one element (130, 430) is a target.

13. The sensor array according to any of the preceding claims, further comprising a plurality of additional elements (850), the additional elements (850) being magnetic elements or targets, wherein at least one additional element of the plurality of additional elements (850) is located between the respective at least one elements (130, 430, 830) for reacting with the sensor of two neighboring soft sensor elements.

14. A method for measuring a force using a sensor array, the method comprising:
providing a sensor array, the sensor array comprising:
one or more evaluation circuits, and
a plurality of soft sensor elements, each of the soft sensor elements comprising a sensor (110, 440, 940), a deformable element (120, 420), and at least one element (130, 430) for reacting with the sensor,
wherein the deformable element (120, 420) extends at least partially between the sensor (110, 440) and the at least one element (130, 430),
wherein the sensor (110, 440, 940) is a multipixel sensor having two or more sensitive elements, and
wherein the one or more evaluation circuits are configured to determine a location of the force based on gradients or differences in data obtained from the two or more sensitive elements of the multipixel sensor;
receiving one or more signals from one or more sensors, wherein the signals are received when the deformable element (120, 420) is deformed by a force; and
deriving the applied force from the one or more received signals, wherein the deriving comprises computing the force based on the gradients or differences in the data obtained from the two or more sensitive elements of the multipixel sensor.

15. The method according to claim 14, wherein the one or more evaluation circuits comprise a common evaluation circuit connected to the plurality of soft sensor elements, or
wherein each soft sensor element (100) of the plurality of soft sensor elements comprises one or more evaluation circuits of the one or more evaluation circuits.

## Patentansprüche

1. Eine Sensoranordnung zum Messen einer Kraft, aufweisend:
eine oder mehrere Auswertungsschaltungen; und
eine Vielzahl von weichen Sensorelementen, wobei die weichen Sensorelemente (100) jeweils aufweisen:
einen Sensor (110, 440, 940), wobei der Sensor (110, 440, 940) ein Multipixelsensor mit zwei oder mehr sensitiven Elementen ist;
ein verformbares Element (120, 420), wobei das verformbare Element (120, 420) durch die Kraft verformbar ist, und
mindestens ein Element (130, 430) zum Reagieren mit dem Sensor (110, 440, 940) zum Messen der Kraft durch eine Verformung des verformbaren Elements (120, 420), wobei sich das verformbare Element (120, 420) zumindest teilweise zwischen dem Sensor (110, 440) und dem mindestens einen Element (130, 430, 940) erstreckt;
wobei die eine oder die mehreren Auswertungsschaltungen konfiguriert sind, um einen Ort der Kraft basierend auf Gradienten oder Differenzen in Daten zu bestimmen, die von den zwei oder mehr sensitiven Elementen des Multipixelsensors erhalten werden.

2. Die Sensoranordnung gemäß Anspruch 1, wobei die eine oder die mehreren Auswertungsschaltungen eine gemeinsame Auswertungsschaltung aufweisen, die mit der Vielzahl von weichen Sensorelementen verbunden ist, oder
wobei jedes weiche Sensorelement (100) der Vielzahl von weichen Sensorelementen eine oder mehrere Auswertungsschaltungen der einen oder der mehreren Auswertungsschaltungen aufweist.

3. Die Sensoranordnung gemäß Anspruch 1, wobei das mindestens eine Element (130, 430) in das verformbare Element (120, 420) eingebettet ist.

4. Die Sensoranordnung gemäß einem der vorhergehenden Ansprüche, wobei die weichen Sensorelemente der Vielzahl von weichen Sensorelementen in einer Linie oder in einem Gitter angeordnet sind.

5. Die Sensoranordnung gemäß einem der vorhergehenden Ansprüche, wobei ein Abstand (p) zwischen zwei benachbarten Elementen der Vielzahl von weichen Sensorelementen äquidistant ist.

6. Die Sensoranordnung gemäß einem der vorhergehenden Ansprüche, wobei der Sensor (110, 440) jedes weichen Sensorelements eine Größe (L) aufweist, wobei die Größe (L) eine Länge einer Kante des Sensors (110, 440, 940) oder ein Durchmesser des Sensors (110, 440, 940) ist, und wobei ein Abstand (p) zwischen zwei benachbarten Elementen der Vielzahl von weichen Sensorelementen p ≤ 3 L ist.

7. Die Sensoranordnung gemäß einem der vorhergehenden Ansprüche, wobei zwei benachbarte Pixel der Multipixelsensoren einen ersten Abstand (s₁) aufweisen und wobei ein zweiter Abstand (s₂) eines letzten Pixels eines Multipixelsensors eines ersten Sensorelements und eines ersten Pixels eines Multipixelsensors eines benachbarten zweiten Sensorelements kleiner oder gleich dem ersten Abstand (s₁) ist.

8. Die Sensoranordnung gemäß einem der vorhergehenden Ansprüche, wobei die Vielzahl von weichen Sensorelementen in ein gemeinsames verformbares Element (120, 420) eingebettet ist.

9. Die Sensoranordnung gemäß Anspruch 8, wobei Teilmengen der Vielzahl von weichen Sensorelementen in mindestens zwei Abschnitten der Sensoranordnung angeordnet sind und wobei die mindestens zwei Abschnitte mechanisch entkoppelt sind.

10. Die Sensoranordnung gemäß Anspruch 9, wobei Abschnitte der Sensoranordnung durch Aussparungen (560, 660) in dem gemeinsamen verformbaren Element (120, 420) getrennt sind.

11. Die Sensoranordnung gemäß einem der vorhergehenden Ansprüche, wobei der Sensor (110, 440, 940) ein passiver Magnetsensor ist und das mindestens eine Element (130, 430) ein Magnetfeld austrahlendes Element ist.

12. Die Sensoranordnung gemäß einem der Ansprüche 1 bis 10, wobei der Sensor (110, 440, 940) ein aktiver Magnetsensor ist und das mindestens eine Element (130, 430) ein Target ist.

13. Die Sensoranordnung gemäß einem der vorhergehenden Ansprüche, weiter aufweisend eine Vielzahl von zusätzlichen Elementen (850), wobei die zusätzlichen Elemente (850) magnetische Elemente oder Targets sind, wobei sich mindestens ein zusätzliches Element der Vielzahl von zusätzlichen Elementen (850) zwischen dem jeweiligen mindestens einen Element (130, 430, 830) zum Reagieren mit dem Sensor von zwei benachbarten weichen Sensorelementen befindet.

14. Ein Verfahren zum Messen einer Kraft unter Verwendung einer Sensoranordnung, das Verfahren aufweisend:
Bereitstellen einer Sensoranordnung, die Sensoranordnung aufweisend:
eine oder mehrere Auswertungsschaltungen, und
eine Vielzahl von weichen Sensorelementen, wobei jedes der weichen Sensorelemente einen Sensor (110, 440, 940), ein verformbares Element (120, 420) und mindestens ein Element (130, 430) zum Reagieren mit dem Sensor aufweist,
wobei sich das verformbare Element (120, 420) zumindest teilweise zwischen dem Sensor (110, 440) und dem mindestens einen Element (130, 430) erstreckt,
wobei der Sensor (110, 440, 940) ein Multipixelsensor mit zwei oder mehr sensitiven Elementen ist, und
wobei die eine oder die mehreren Auswertungsschaltungen konfiguriert sind, um einen Ort der Kraft basierend auf Gradienten oder Differenzen in Daten zu bestimmen, die von den zwei oder mehr sensitiven Elementen des Multipixelsensors erhalten werden;
Empfangen eines oder mehrerer Signale von einem oder mehreren Sensoren, wobei die Signale empfangen werden, wenn das verformbare Element (120, 420) durch eine Kraft verformt wird; und
Ableiten der angewendeten Kraft aus dem einen oder den mehreren empfangenen Signalen, wobei das Ableiten ein Berechnen der Kraft basierend auf den Gradienten oder Differenzen in den Daten aufweist, die von den zwei oder mehr sensitiven Elementen des Multipixelsensors erhalten werden.

15. Das Verfahren gemäß Anspruch 14, wobei die eine oder die mehreren Auswertungsschaltungen eine gemeinsame Auswertungsschaltung aufweisen, die mit der Vielzahl von weichen Sensorelementen verbunden ist, oder
wobei jedes weiche Sensorelement (100) der Vielzahl von weichen Sensorelementen eine oder mehrere Auswertungsschaltungen der einen oder der mehreren Auswertungsschaltungen aufweist.

## Revendications

1. Un réseau de capteurs pour mesurer une force, comprenant :
un ou plusieurs circuits d'évaluation ; et
une pluralité d'éléments capteurs souples, les éléments capteurs souples (100) comprenant chacun :
un capteur (110, 440, 940), le capteur (110, 440, 940) étant un capteur multipixel avec deux ou plus éléments sensibles ;
un élément déformable (120, 420), l'élément déformable (120, 420) étant déformable par la force, et
au moins un élément (130, 430) pour réagir avec le capteur (110, 440, 940) pour mesurer la force par une déformation de l'élément déformable (120, 420), l'élément déformable (120, 420) s'étendant au moins partiellement entre le capteur (110, 440) et l'au moins un élément (130, 430, 940) ;
dans lequel les un ou plusieurs circuits d'évaluation sont configurés pour déterminer un emplacement de la force sur la base de gradients ou de différences de données obtenues depuis les deux ou plusieurs éléments sensibles du capteur multipixel.

2. Le réseau de capteurs selon la revendication 1, dans lequel les un ou plusieurs circuits d'évaluation comprennent un circuit d'évaluation commun relié à la pluralité d'éléments capteurs souples, ou
dans lequel chaque élément capteur souple (100) de la pluralité d'éléments capteurs souples comprend un ou plusieurs circuits d'évaluation des un ou plusieurs circuits d'évaluation.

3. Le réseau de capteurs selon la revendication 1, dans lequel l'au moins un élément (130, 430) est noyé dans l'élément déformable (120, 420).

4. Le réseau de capteurs selon l'une des revendications précédentes, dans lequel les éléments capteurs souples de la pluralité d'éléments capteurs souples sont agencés suivant une ligne ou suivant une grille.

5. Le réseau de capteurs selon l'une des revendications précédentes, dans lequel un pas (p) entre deux éléments voisins de la pluralité d'éléments capteurs souples est équidistant.

6. Le réseau de capteurs selon l'une des revendications précédentes, dans lequel le capteur (110, 440) de chaque élément capteur souple présente une dimension (L), la dimension (L) étant une longueur d'un bord du capteur (110, 440, 940) ou un diamètre du capteur (110, 440, 940), et dans lequel un pas entre deux éléments voisins de la pluralité d'éléments capteurs souples vérifie p ≤ 3L.

7. Le réseau de capteurs selon l'une des revendications précédentes, dans lequel deux pixels voisins des capteurs multipixel présentent un premier espacement (s1) et dans lequel une second espacement (s2) d'un dernier pixel d'un capteur multipixel d'un premier élément capteur et un premier pixel d'un capteur multipixel d'un second élément capteur voisin est inférieur ou égal au premier espacement (s1).

8. Le réseau de capteurs selon l'une des revendications précédentes, dans lequel la pluralité d'éléments capteurs souples est noyée dans un élément déformable commun (120, 420).

9. Le réseau de capteurs selon la revendication 8, dans lequel des sous-ensembles de la pluralité d'éléments capteurs souples sont agencés selon au moins deux parties du réseau de capteurs, et dans lequel les au moins deux parties sont mécaniquement découplées.

10. Le réseau de capteurs selon la revendication 9, dans lequel les parties du réseau de capteurs sont séparées par des évidements (560, 660) dans l'élément déformable commun (120, 420).

11. Le réseau de capteurs selon l'une des revendications précédentes, dans lequel le capteur (110, 440, 940) est un capteur magnétique passif et l'au moins un élément (130, 430) est un élément produisant un champ magnétique.

12. Le réseau de capteurs selon l'une des revendications 1 à 10, dans lequel le capteur (110, 440, 940) est un capteur magnétique actif et l'au moins un élément (130, 430) est une cible.

13. Le réseau de capteurs selon l'une des revendications précédentes, comprenant en outre une pluralité d'éléments additionnels (850), les éléments additionnels (850) étant des cibles ou éléments magnétiques, dans lequel au moins un élément additionnel de la pluralité d'éléments additionnels (850) est situé entre les au moins un élément (130, 430, 830) respectif pour réagir avec le capteur de deux éléments capteurs souples voisins.

14. Un procédé de mesure d'une force à l'aide d'un réseau de capteurs, le procédé comprenant :
l'obtention d'un réseau de capteurs, le réseau de capteurs comprenant :
un ou plusieurs circuits d'évaluation, et
une pluralité d'éléments capteurs souples, chacun des éléments capteurs souples comprenant un capteur (110, 440, 940), un élément déformable (120, 420), et au moins un élément (130, 430) pour réagir avec le capteur,
dans lequel l'élément déformable (120, 420) s'étend au moins partiellement entre le capteur (110, 440) et l'au moins un élément (130, 430),
dans lequel le capteur (110, 440, 940) est un capteur multipixel avec deux ou plus éléments sensibles, et
dans lequel les un ou plusieurs circuits d'évaluation sont configurés pour déterminer un emplacement de la force sur la base de gradients ou de différences de données obtenues depuis les deux ou plus éléments sensibles du capteur multipixel ;
la réception d'un ou plusieurs signaux en provenance d'un ou plusieurs capteurs, les signaux étant reçus lorsque l'élément déformable (120, 420) est déformé par une force ; et
la déduction de la force appliquée à partir des un ou plusieurs signaux reçus, la déduction comprenant le calcul de la force sur la base des gradients ou des différences des données obtenues depuis les deux ou plus éléments sensibles du capteur multipixel.

15. Le procédé selon la revendication 14, dans lequel les un ou plusieurs circuits d'évaluation comprennent un circuit d'évaluation commun relié à la pluralité d'éléments capteurs souples, ou
dans lequel chaque élément capteur souple (100) de la pluralité d'éléments capteurs souples comprend un ou plusieurs circuits d'évaluation des un ou plusieurs circuits d'évaluation.
